# EUROPÄISCHE PATENTSCHRIFT

(11) **EP 2 417 418 B1**
(45) Veröffentlichungstag und Bekanntmachung des Hinweises auf die Patenterteilung: **22.04.2015**
(21) Anmeldenummer: 10715488.2
(22) Anmeldetag: 11.03.2010
(51) Int. Cl.: G01B 11/22, B60C 11/24

(54) **VERFAHREN UND VORRICHTUNG ZUM ERMITTELN DER PROFILTIEFE EINES FAHRZEUGREIFENS**
METHOD AND APPARATUS FOR DETERMINING THE TREAD DEPTH OF A VEHICLE TIRE
PROCÉDÉ ET DISPOSITIF DESTINÉ À DÉTERMINER LA PROFONDEUR DE SCULPTURE D'UN PNEUMATIQUE DE VÉHICULE

(30) Priorität: 08.04.2009 DE 102009016498
(43) Veröffentlichungstag der Anmeldung: 15.02.2012
(73) Patentinhaber: Ventech Systems GmbH, 86663 Asbach-Bäumenheim (DE)
(72) Erfinder: PINGEL, Ulrich, 45770 Marl (DE)
(74) Vertreter: Angerhausen, Christoph
(86) Internationale Anmeldenummer: PCT/DE2010/000258
(87) Internationale Veröffentlichungsnummer: WO 2010/115390

(56) Entgegenhaltungen:
- EP-A1- 0 469 948
- EP-A2- 0 816 799
- EP-A2- 0 869 330
- WO-A1-98/34090
- DE-A1- 1 809 459
- DE-A1- 10 313 191

## Beschreibung

Die Erfindung betrifft ein Verfahren zum Ermitteln der Profiltiefe eines Fahrzeugreifens, wobei der Reifen an einem Fahrzeug montiert ist, bei dem der Reifen über eine Messstation gerollt wird, das Profil des Reifens entlang mindestens einer Messlinie quer zur Rollrichtung des Reifens optisch abgetastet wird, wobei ein von einer Lichtquelle ausgehender Strahlenfächer an der Reifenoberfläche reflektiert wird und ein Signal des reflektierten Strahlenfächers von einem Sensor aufgenommen wird und das Signal ausgewertet wird. Die Erfindung betrifft weiter eine Vorrichtung zum Ermitteln der Profiltiefe eines Fahrzeugreifens, mit einer Messstation, die eine Lichtquelle und einen bildauflösenden Sensor aufweist, sowie mit einer Auswerteeinheit für Signale eines von der Reifenoberfläche reflektierten Strahlenfächers.

Das eben beschriebene Verfahren ermöglicht eine Messung der Reifenprofiltiefe während der Fahrt eines Fahrzeuges über eine stationäre Sensorstation. Hierbei wird das ganze Querprofil des Reifens, jedoch nur ein Teilbereich des Reifenumfangs, erfasst.

Die bisher üblichen Verfahren zur Messung der Profiltiefe während der Überfahrt über eine Station basieren darauf, dass die Profiltiefe genau dann gemessen wird, wenn sich der Reifen mit seiner Aufstandsfläche waagerecht über dem Sensor befindet. Dies hat den Vorteil, dass das Reifenprofil während einer kurzen Zeit statisch über der Aufnahmefläche steht und mit tastenden Verfahren ermittelt oder mit berührungslosen Verfahren, wie Ultraschall, Radarreflexion oder anderen optischen Verfahren, beispielsweise Lasertriangulation oder Lichtschnittverfahren, abgetastet werden kann.

Die Lichtschnittmesstechnik ist für die schnelle dreidimensionale Erfassung von Objekten besonders vorteilhaft. Dabei projiziert ein Laser mit einer speziellen Aufweitungsoptik eine Lichtlinie auf die Oberfläche des Reifens. Mit der Lichtschnittmesstechnik arbeitende Systeme kommen in allen Stadien der Reifenproduktion bis hin zur Prüfung der fertigen Produkte zum Einsatz. Die Erfindung meint eine derartige Inspektion des Reifens während der Produktion jedoch nicht. Vielmehr stellt die Erfindung darauf ab, eine Reifenprüfung bei an einem Fahrzeug montierten Reifen durchzuführen, beispielsweise im fließenden Verkehr, ohne dass der Verkehrsfluss selbst beeinflusst würde.

Die DE 43 16 984 A1 beschreibt ein Verfahren und eine Vorrichtung zur automatischen Ermittlung der Profiltiefe von Fahrzeugreifen, die am Fahrzeug montiert sind. Im Boden einer Messstation ist eine teilweise lichtdurchlässige Messplatte angeordnet, unter der sich ein Messkopf befindet. Dieser Messkopf weist einen Laser und einen bildauflösenden Sensor als Triangulationseinheit auf. Zur Messung der Profiltiefe eines Kraftfahrzeugreifens wird die Messplatte von dem Reifen überrollt oder der Reifen wird auf der Messplatte abgestellt. Der Laser erzeugt dann einen Lichtfleck auf der Profiloberfläche des Reifens. Durch den Sensor wird die Position des Lichtflecks beobachtet. Die Ausgangssignale des Sensors werden einer Auswerteeinheit übergeben, die das Maß des Reifenprofils ermittelt. Der Messkopf ist an einem Schlitten angeordnet und quer zur Abrollrichtung des Reifens bewegbar. Um ein verfälschtes Messergebnis zu vermeiden, wird der Laser so ausgerichtet, dass der Laserstrahl außerhalb der Aufstandsfläche des Reifens auf das Reifenprofil trifft. Innerhalb der Aufstandsfläche ist der Reifen durch die Reifenlast und den Reifendruck erheblich belastet, wodurch die Noppen des Reifenprofils in Radialrichtung des Reifens zusammengedrückt werden, so dass die eigentliche Profilkontur möglicherweise gar nicht mehr erkennbar ist und die Profiltiefe als zu gering eingeschätzt wird. Das Messergebnis entspricht dann nicht mehr der manuellen Messung, die als Referenz anzusehen ist. Da dieser Effekt mindestens von den Materialeigenschaften des Gummis, vom Reifenprofil, von der Profiltiefe, vom Reifendruck und von der Reifenlast abhängig ist, lässt er sich auch nicht erfassen und kompensieren. Außerhalb der Aufstandsfläche wird dagegen praktisch ohne Last gemessen.

Allerdings haben punktuelle Messungen, wie sie bei der DE 43 16 984 A1 durchgeführt werden, den Nachteil, dass sie keinen Bezug zur Reifenaußenkontur haben. Misst der Sensor in einer Profilrille, hat er keine Information, auf welcher Höhe die Referenzfläche ist, und kann somit auch keine genauen Ergebnisse erzielen. Dies lässt sich wiederum nur durch Auflage des Reifens umgehen, was aber die weiter oben geschilderten Nachteile mit sich bringt.

Bei diesem bekannten Verfahren wird überdies nur entlang einer Linie des Reifenprofils quer zur Abrollrichtung des Reifens gemessen. Dabei hängt es allein vom Zufall ab, ob die Profiltiefe an dieser Stelle des Reifens für die Profiltiefe des gesamten Reifens repräsentativ ist. Es ist auch nicht möglich, eine bestimmte Stelle der Reifenprofiloberfläche auszusuchen, an der die Messung vorgenommen wird, da es völlig willkürlich ist, welche Stelle der Profiloberfläche sich gerade über dem Messkopf befindet. Die DE 43 16 984 A1 versucht diesem Problem zu begegnen, indem mehrere in Fahrtrichtung hintereinander angeordnete Messeinheiten vorgesehen werden.

Die WO 98/34090 löst einen Teil der oben angesprochenen Probleme dadurch, dass die Profiloberfläche des Kraftfahrzeugreifens von einem linienförmigen Laserstrahl beaufschlagt wird. Das von der Profiloberfläche des Reifens reflektierte Licht wird durch einen bildauflösenden Sensor erfasst, dessen Signale zur Erzeugung von Ausgangsdaten nach Maßgabe der Profiltiefe verarbeitet werden. Dabei wird der Kraftfahrzeugreifen der an mindestens eine drehbare Rolle angelegt ist, während der Messung gedreht, so dass die Messung an mehreren Stellen des Reifenprofils durchführbar ist. Außerdem sollen durch das Drehen des Reifens die Kräfte wirksam werden, durch welche Verschmutzungen und lose sitzende Steine von der Profiloberfläche entfernt werden. Da dieses Verfahren in einer Werkstatt verwendet werden soll, beispielsweise während einer Bremsenprüfung, ist das System nicht ohne weiteres in einer Verkehrssituation verwendbar, in der je nach Wetterbedingungen ständig Verschmutzungen und auch Nässe vorherrschen können, die bei der Messung stören, da beilspielsweise nasse Reifen große Ungenauigkeiten durch Spiegelungen hervorrufen.

Die DE 103 13 191 A1 beschreibt ein Verfahren zur berührungslosen dynamischen Erfassung des Profils eines Festkörpers, insbesondere eines Fahrzeugreifens. Die Profilbestimmung erfolgt mittels Triangulation, wobei aus der Bewegungsgeschwindigkeit des Fahrzeugreifens bestimmte Korrekturwerte berücksichtigt werden.

Die DE 18 09 459 A1 offenbart ein Verfahren und eine Anordnung zur Messung der Profiltiefe von Kraftfahrzeugreifen, bei der das belastete Profil vermessen wird. Bei der EP 0 869 330 A2 wird der Reifen von Rollen während der Vermessung des Reifenprofils mittels Triangulation rotiert. Letzteres offenbart auch die WO 98/34090, wobei der das reflektierte Signal empfangende Sensor orthogonal zur Reifenoberfläche ausgerichtet ist. Auch die EP 0 816 799 A2 beschreibt ein Verfahren, bei dem der Reifen von Rollen rotiert wird. Die Profiltiefenbestimmung erfolgt ebenfalls mittels Triangulation.

Es ist daher die Aufgabe der Erfindung, ein Verfahren und eine Vorrichtung zum Ermitteln der Profiltiefe eines Fahrzeugreifens zur Verfügung zu steilen, bei dem bzw. bei dem die Qualität der Messergebnisse das durch eine verschmutzte Umgebung oder durch Nässe nicht wesentlich beeinträchtigt wird.

Diese Aufgabe wird durch ein Verfahren nach Anspruch 1 und durch eine Vorrichtung nach Anspruch 5 gelöst. Vorteilhafte Ausgestaltungen sind Gegenstand der jeweils rückbezogenen Unteransprüche.

Erfindungsgemäß ist vorgesehen, dass das Signal nicht-orthogonal zur Reifenoberfläche auf genommen wird, d. h. es befindet sich bei der Messung weder die Lichtquelle noch der Sensor im direkten Reflexionswinkel. Hierdurch führen Spiegelungen nasser Reifen nicht zu Messfehlern oder Aussetzern. Um ein genaues Messergebnis zu erhalten, muss jedoch der Oberflächenwinkel des Reifens an der Messstelle ermittelt werden und mit in die Berechnung einbezogen werden. Dies kann durch gleichzeitige Erfassung an zwei vertikal versetzten Positionen und/oder durch mehrere Messungen in verschiedenen Entfernungen zum Reifen erfolgen.

Bevorzugt sind die Strahlenfächer so angeordnet, dass sie sich auf dem Reifen zu einer durchgängigen, horizontalen Linie überlappen, entweder auf der gleichen Höhe, um ein durchgängiges Liniengebilde zu erhalten, oder auf unterschiedlichen Höhen, um mehrere Linien in unterschiedlichen Höhenpositionen zu erhalten.

Dabei erfolgt eine Kompensation von Messeinflüssen durch den Winkel der Lichtquelle und die Blickrichtung des Sensors.

Die Messung geschieht bevorzugt an mehreren Stellen des Reifens bei einer Messaufnahme, also gleichzeitig durch mehrere Lichtlinien oder durch mehrere sequentielle Aufnahmen an jeweils verschiedenen Positionen des Reifens. Hierdurch können Messungen auf Verschleißmarken erkannt und berücksichtigt werden. Durch den Vergleich mehrerer Profiltiefenmessungen entlang dem Reifenumfang ist das Erkennen von longitudinalen Verschleißerscheinungen am Reifen möglich.

Die bisher beschriebene Technik zur Messung der Profiltiefe ist die Lasertriangulation entweder als punktuelle Messung oder im Lichtschnittverfahren. Neben der Gefährdung durch die intensive Laserstrahlung zeigen sich auch Nachteile durch das Speckle-Rauschen, eine hohe Empfindlichkeit gegen Verschmutzung und hohe Kosten. Dabei hat der Laser den großen Vorteil der scharfen Abbildung auf großen Entfernungen, wodurch eine optische Triangulationsanordnung einfach und hochgenau aufzubauen ist.

Bei der Messung von Reifenprofiltiefen wird an einem Target mit mattschwarzen Oberflächen gemessen, die eine hohe Laserleistung erfordern, was eine starke Gefährdung für den Menschen darstellt. Weiterhin treten ohne aufwändige Vorkehrungen auf diffus reflektierenden Oberflächen lokale Interferenzen auf, die die Messgenauigkeit erheblich beeinträchtigen können.

Diesen Problemen wird begegnet, wenn weiter erfindungsgemäß mit mindestens einer lichtemittierenden Diode beleuchtet wird.

Bei einer Triangulationsanordnung in vertikaler Richtung ist es notwendig, dass eine oder mehrere scharf abgebildete waagerechte Linien als Lichtlinien oder Lichtbalken auf den Reifen projiziert werden. Wird eine Linie oder eine Lichtbalkenkante nun aus einem anderen vertikalen Winkel zum Beispiel mit einer Kamera betrachtet, so werden Tiefenänderungen des Reifens ähnlich sichtbar wie beim Laserlichtschnittverfahren. Bei einem breiteren Lichtbalken können dessen obere und untere Kante jeweils getrennt ausgewertet werden, so dass zwei unabhängige Messergebnisse erhalten werden. Daraus kann beispielsweise der Oberflächenwinkel des Reifens bestimmt werden.

Die auf den Reifen zu projizierenden Lichtbalken oder Lichtlinien können durch eine linienförmige Abschattung einer Punktlichtquelle, wie beispielsweise einer lichtemittierenden Diode, erhalten werden. Die Abschattung kann durch eine Fokussierung der Lichtquelle erheblich verbessert werden. Das Licht wird dann vom Schlitz abgeschattet und bildet einen hellen und scharf abgegrenzten Lichtbalken auf dem Reifen.

Lichtemittierende Dioden haben den Vorteil, dass sie weitgehend monochromatisches Licht erzeugen. Hierdurch kann Fremdlicht mittels eines schmalbandigen Farbfilters wirkungsvoll ausgeblendet werden.

Im folgenden soll die Erfindung anhand der Zeichnungsfigur erläutert werden. Diese zeigt eine schematische Skizze einer Vorrichtung zum Ermitteln der Profiltiefe eines Fahrzeugreifens nach einer Ausführungsform der Erfindung.

Der an einem Fahrzeug montierte Reifen 1 wird vor oder hinter der Auflagefläche vermessen. Dabei wird mittels eines Lasers oder einer abgeschatteten lichtemittierenden Diode als Lichtquelle 3 ein Strahlenfächer erzeugt, der quer zur Fahrtrichtung auf den Reifen 1 auftrifft. Es wird nicht-orthogonal zur Oberfläche 2 des Reifens 1 gemessen, so dass man sich weder mit der Lichtquelle 3 noch mit dem Sensor 4 in dem direkten Reflexionswinkel befindet. Der Sensor4 ist dabei eine zweidimensional auflösende Kamera.

Mit diesem Messverfahren ist eine sehr flache Bauweise möglich, die ein überfahrbares Modul oder ein einfach in den Boden einzulassendes Modul ermöglicht.

Die Auswertung erfolgt durch Generierung einer Hüllkurve über das gemessene Reifenprofil und durch die Suche nach den tiefsten Stellen der Profilrillen. Die Reifenkanten werden ermittelt, ebenso wie die Hauptprofilrillen im Querprofil, was dann eine Einengung auf einen auszuwertenden Bereich, z. B. auf 75 % der Reifenbreite entsprechend der Straßenverkehrszulassungsverordnung StVZO ermöglicht. Der Winkel zwischen Reifenoberfläche und Messsystem wird kompensiert. Schließlich wird die kritische Profiltiefe durch die Differenz zwischen Hüllkurve und tiefster Stelle der Profilrillen berechnet.

Mit der Erfindung gelingt die Kompensation von Messeinflüssen durch den Winkel der Lichtquelle und die Blickrichtung des Sensors. Dabei können die Reifenposition, die Reifenbreite und die relevante Profilfläche anhand der Reifenflanken bestimmt werden.

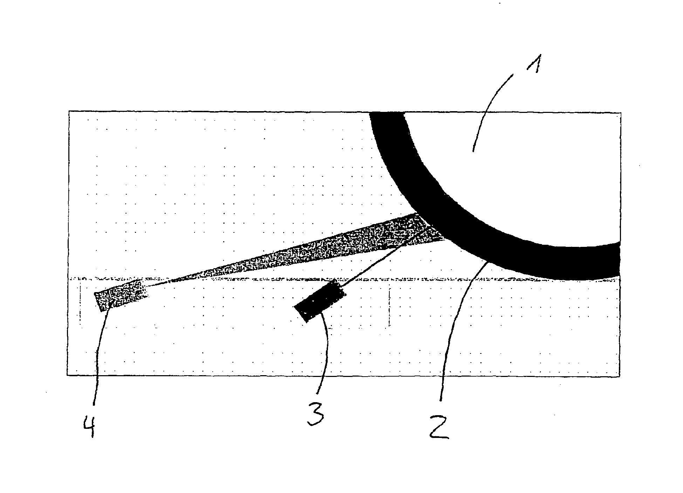

## Patentansprüche

1. Verfahren zum Ermitteln der Profiltiefe eines Fahrzeugreifens während der Fahrt eines Fahrzeuges wobei der Reifen an einem Fahrzeug montiert ist, bei dem
- der Reifen über eine Messstation gerollt wird;
- das Profil des Reifens während der Fahrt auf mindestens einer Messlinie quer zur Rollrichtung des Reifens optisch abgetastet wird, wobei ein von einer Lichtquelle ausgehender Strahlenfächer an der Reifenoberfläche reflektiert wird und ein Signal des reflektierten Strahlenfächers von einem Sensor nicht-orthogonal zur Reifenoberfläche aufgenommen wird, und wobei außerhalb der Aufstandsfläche des Reifens auf der Messstation gemessen wird;
- das Signal des reflektierten Strahlenfächers mittels eines Triangulationsverfahrens ausgewertet wird;
wobei ein Oberflächenwinkel des Reifens als Winkel zwischen der Normalen zur Reifenoberfläche und der Richtung zur Lichtquelle oder der Richtung zum Sensor durch gleichzeitige Erfassung an zwei vertikal versetzten Positionen und/oder durch mehrere Messungen in verschiedenen Entfernungen zum Reifen bestimmt wird.

2. Verfahren nach Anspruch 1, **dadurch gekennzeichnet, dass** der Strahlenfächer im Lichtschnittverfahren, insbesondere mit einem Laser, erzeugt wird.

3. Verfahren nach Anspruch 1, **dadurch gekennzeichnet, dass** der Strahlenfächer durch eine linienförmige Abschattung mindestens einer Punktlichtquelle erzeugt wird.

4. Verfahren nach Anspruch 3, **dadurch gekennzeichnet, dass** Signale von beiden Kanten der linienförmigen Abschattung ausgewertet werden, um den Oberflächenwinkel des Reifens zu bestimmen.

5. Vorrichtung zum Ermitteln der Profiltiefe eines Fahrzeugreifens während der Fahrt eines Fahrzeuges, wobei der Reifen an einem Fahrzeug montiert ist, mit
- einer Messstation, die eine Lichtquelle und einen Sensor umfasst, wobei die Lichtquelle einen Strahlenfächer erzeugt, der sich entlang mindestens einer Messlinie quer zur Rollrichtung und außerhalb der Aufstandsfläche des Reifens erstreckt, und wobei der Sensor Signale des von der Reifenoberfläche reflektierten Strahlenfächers nicht-orthogonal zur Reifenoberfläche aufnimmt; und
- einer Auswerteeinheit für die Signale des von der Reifenoberfläche reflektierten Strahlenfächers, welche ein Triangulationsverfahren durchläuft;
wobei die Messsation weiterhin darauf ausgelegt ist während der Fahrt, durch gleichzeitige Erfassung an zwei vertikal versetzten Positionen und/oder durch mehrere Messungen in verschiedenen Entfernungen zum Reifen einen Oberflächenwinkel des Reifens als Winkel zwischen der Normalen zur Reifenoberfläche und der Richtung zur Lichtquelle oder der Richtung zum Sensor zu bestimmen.

6. Vorrichtung nach Anspruch 5, **dadurch gekennzeichnet, dass** die Lichtquelle ein Laser oder mindestens eine lichtemittierende Diode ist.

7. Vorrichtung nach Anspruch 5, **dadurch gekennzeichnet, dass** der Sensor eine zweidimensional auflösende Kamera ist.

8. Vorrichtung nach Anspruch 5, bei der die Lichtquelle eine lichtemittierende Diode ist, **dadurch gekennzeichnet, dass** das Umgebungslicht durch spektrale Filter eliminiert wird.

## Claims

1. A method for determining the tread depth of a vehicle tyre during the journey of a vehicle, wherein the tyre is mounted on a vehicle, wherein
- the tyre is rolling over a measuring station;
- the tread of the tyre is optically sensed on at least one measuring line transversely to the rolling direction of the tyre during the journey, wherein a ray fan extending from a light source being reflected at the tyre surface and a signal of the reflected ray fan is recorded in a non-orthogonal manner to the tyre surface, and wherein it is measured outside the footprint of the tyre on the measuring station;
- the signal of the reflected ray fan is evaluated by way of a triangulation method;
wherein a surface angle of the tyre is determined as an angle between the normal with respect to the tyre surface and the direction toward the light source or the direction toward the sensor by simultaneous capturing at two vertical offset positions and/or by means of multiple measurements in different distances to the tyre.

2. The method according to claim 1, **characterized in that** the ray fan is produced in a light section process, in particular by using a laser.

3. The method according to claim 1, **characterized in that** the ray fan is produced by a line-shaped shadowing of at least one spotlight source.

4. The method according to claim 3, **characterized in that** the signals of both edges of the line-shaped shadowing are evaluated to determine the surface angle of the tyre.

5. An apparatus for determining the tread depth of a vehicle tyre during the journey of a vehicle, wherein the tyre is mounted on a vehicle, comprising
- a measuring station including a light source and a sensor, wherein the light source produces a ray fan extending along at least one measuring line transversely to the rolling direction of the tyre outside the footprint of the tyre, and wherein the sensor records signals of the ray fan reflected from the tyre surface in a non-orthogonal manner with respect to the tyre surface; and
- an evaluation unit for the signals of the ray fan reflected from the tyre surface which runs through a triangulation method;
wherein the measuring station is further adapted to determine during the journey a surface angle of the tyre as an angle between the normal of the tyre surface and the direction toward the light source or the direction toward the sensor by means of simultaneous detection at two vertically offset positions and/or by means of multiple measurements in different distances to the tyre.

6. The apparatus of claim 5, **characterized in that** the light source is a laser or at least one light emitting diode.

7. The apparatus of claim 5, **characterized in that** the sensor is a two-dimensionally resolving camera.

8. The apparatus of claim 5, wherein the light source is a light emitting diode, **characterized in that** ambient light is eliminated by spectral filters.

## Revendications

1. Procédé destiné à calculer la profondeur de profil d'un pneu de véhicule pendant que le véhicule roule, étant entendu que le pneu est monté sur un véhicule, dans lequel
- on fait rouler le pneu sur une station de mesure ;
- le profil du pneu est détecté de façon optique pendant qu'il roule sur au moins une ligne de mesure transversale à la direction de roulage du pneu, étant entendu qu'un éventail de rayons partant d'une source lumineuse est réfléchi sur la surface du pneu et qu'un signal de l'éventail de rayons réfléchi est reçu par un capteur de façon non perpendiculaire à la surface du pneu, et étant entendu qu'on procède à la mesure au niveau de la station de mesure en dehors de la surface au sol du pneu ;
- le signal de l'éventail de rayons réfléchi est analysé au moyen d'un procédé de triangulation ;
étant entendu qu'un angle de surface du pneu est déterminé en tant qu'angle entre la normale par rapport à la surface du pneu et la direction par rapport à la source lumineuse ou la direction par rapport au capteur par la saisie simultanée à deux positions décalées verticalement et/ou par plusieurs mesures à différentes distances par rapport au pneu.

2. Procédé selon la revendication 1, **caractérisé en ce que** l'éventail de rayons est produit par un procédé de coupe optique, en particulier avec un laser.

3. Procédé selon la revendication 1, **caractérisé en ce que** l'éventail de rayons est produit par une occultation en forme de ligne d'au moins une source lumineuse ponctuelle.

4. Procédé selon la revendication 3, **caractérisé en ce que** des signaux des deux bords de l'occultation en forme de ligne sont analysés pour déterminer l'angle de surface du pneu.

5. Dispositif destiné à calculer la profondeur de profil d'un pneu de véhicule pendant que le véhicule roule, étant entendu que le pneu est monté sur un véhicule, comprenant
- une station de mesure qui comprend une source lumineuse et un capteur, étant entendu que la source lumineuse produit un éventail de rayons qui s'étend le long d'au moins une ligne de mesure transversale à la direction de roulage et en dehors de la surface au sol du pneu, et étant entendu que le capteur reçoit des signaux de l'éventail de rayons réfléchi par la surface du pneu de façon non perpendiculaire à la surface du pneu ; et
- une unité d'analyse pour les signaux de l'éventail de rayons réfléchi par la surface du pneu, dans laquelle un procédé de triangulation est exécuté ;
étant entendu que la station de mesure est également conçue pour déterminer, pendant que le pneu roule, un angle de surface du pneu en tant qu'angle entre la normale par rapport à la surface du pneu et la direction par rapport à la source lumineuse ou la direction par rapport au capteur par la saisie simultanée à deux positions décalées verticalement et/ou par plusieurs mesures à différentes distances par rapport au pneu.

6. Dispositif selon la revendication 5, **caractérisé en ce que** la source lumineuse est un laser ou au moins une diode électroluminescente.

7. Dispositif selon la revendication 5, **caractérisé en ce que** le capteur est une caméra à résolution bidimensionnelle.

8. Dispositif selon la revendication 5 dans lequel la source lumineuse est une diode électroluminescente, **caractérisé en ce que** la lumière ambiante est éliminée au moyen de filtres spectraux.
